# EUROPEAN PATENT APPLICATION

(11) **EP 4 553 787 A1**
(43) Date of publication of application: **14.05.2025**
(21) Application number: 24212384.2
(22) Date of filing: 12.11.2024
(51) Int. Cl.: G06V 10/774, G06V 10/80, G06V 10/82, G06V 20/62

(54) **IDENTIFICATION METHOD AND IDENTIFICATION SYSTEM FOR LICENSE PLATE**

(30) Priority: 13.11.2023 TW 112143572
(71) Applicant: Getac Technology Corporation, New Taipei City 221009 (TW)
(72) Inventor: CHENG, Ming-Che, 11568 Taipei City (TW)
(74) Representative: Viering, Jentschura & Partner mbB Patent- und Rechtsanwälte

(57) **Abstract**

An identification method and an identification system (1) for a license plate are provided. The method includes: obtaining images in sequence; decomposing each image into a vehicle image and a license plate image, inputting the vehicle image into a vehicle detection model (M1) to detect a vehicle through first processing stages; inputting the detected vehicle into a vehicle metadata identification model (M2) to obtain vehicle metadata through second processing stages; inputting the license plate image into the license plate recognition model to identify license plate information through third processing stages; and merging and processing the license plate information and vehicle metadata to generate a license plate recognition result. The first processing stages and the second processing stages form a first pipeline architecture, the third processing stages form a second pipeline architecture, and the first pipeline architecture and the second pipeline architecture are executed simultaneously.

## Description

### FIELD OF THE INVENTION

The present invention relates to a method and a system, and more particularly to an identification method and an identification system for a license plate.

### BACKGROUND OF THE INVENTION

Existing license plate identification systems encompass numerous image processing and identification processes, and operating these procedures in a sequential manner can result in extended processing times, which may not meet user requirements. Therefore, a parallelization architecture can be adopted to maximize the use of all computing resources.

However, it is important to note that not all image processing and identification tasks can be executed in parallel. Certain tasks require a specific sequence for effective processing and recognition. Consequently, the advantages of parallelizing various identification tasks can be restricted.

### SUMMARY OF THE INVENTION

The present invention provides an identification method and an identification system for a license plate capable of greatly improving processing efficiency of license plate identification.

One of the technical aspects adopted by the present invention is to provide an identification method for a license plate, and the identification method includes: using at least one processor to perform the following steps: sequentially obtaining a plurality of images, wherein each of the plurality of images includes one or more vehicles and at least one license plate; decomposing each of the plurality of images into a vehicle image and at least one license plate image, and inputting the vehicle image into a vehicle detection model to detect at least one vehicle through a plurality of first processing stages; inputting the at least one vehicle into a vehicle metadata identification model to obtain vehicle metadata through a plurality of second processing stages; inputting the at least one license plate image into a license plate identification model to identify at least one piece of license plate information through a plurality of third processing stages; and merging the at least one piece of license plate information and the vehicle metadata to generate a license plate identification result. The plurality of first processing stages and the plurality of second processing stages form a first pipeline architecture, the plurality of third processing stages form a second pipeline architecture, and the first pipeline architecture and the second pipeline architecture are executed simultaneously.

Another one of the technical aspects adopted by the present invention is to provide an identification system for a license plate, and the identification system includes at least one processor and a memory. The at least one processor is configured to perform the following steps: sequentially obtaining a plurality of images, wherein each of the plurality of images includes one or more vehicles and at least one license plate; decomposing each of the plurality of images into a vehicle image and at least one license plate image, and inputting the vehicle image into a vehicle detection model to detect at least one vehicle through a plurality of first processing stages; inputting the at least one vehicle into a vehicle metadata identification model to obtain vehicle metadata through a plurality of second processing stages; inputting the at least one license plate image into a license plate identification model to identify at least one piece of license plate information through a plurality of third processing stages; and merging the at least one piece of license plate information and the vehicle metadata to generate a license plate identification result. The plurality of first processing stages and the plurality of second processing stages form a first pipeline architecture, the plurality of third processing stages form a second pipeline architecture, and the first pipeline architecture and the second pipeline architecture are executed simultaneously.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a functional block diagram of an identification system for a license plate according to one embodiment of the present invention;
FIG. 2 is a flowchart of an identification method for a license plate according to one embodiment of the present invention;
FIG. 3 is a schematic diagram of a synchronous execution of a first pipeline architecture and a second pipeline architecture according to one embodiment of the present invention; and
FIG. 4 is a schematic diagram of a synchronous execution of a third pipeline architecture and a fourth pipeline architecture according to one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated upon or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

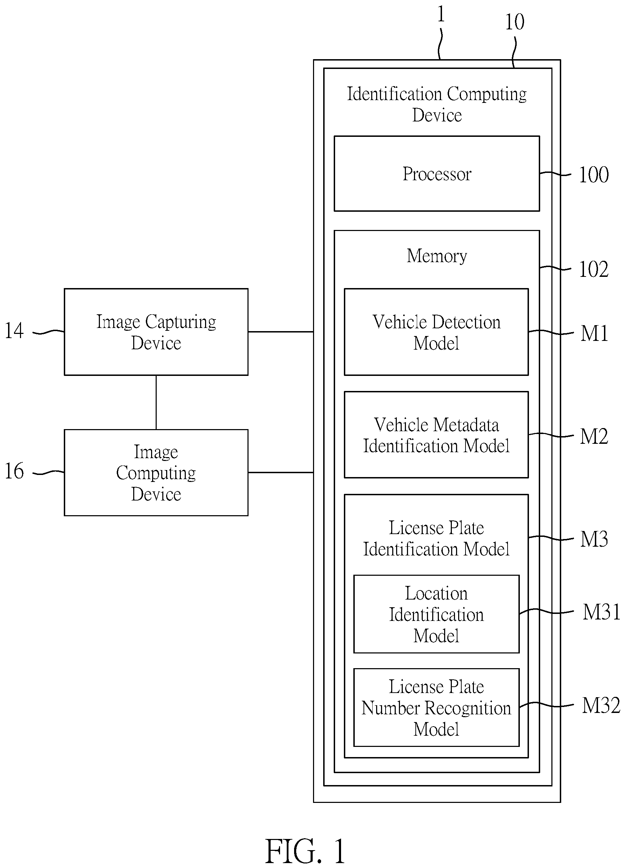

FIG. 1 is a functional block diagram of an identification system for a license plate according to one embodiment of the present invention. Referring to FIG. 1, one embodiment of the present invention provides an identification system 1 for a license plate, and the identification system 1 includes an identification computing device 10 that includes a processor 100 and a memory 102. It is worth mentioning that a primary focus of the identification system 1, as provided in the present invention, is to optimize a generation of license plate-related metadata, thereby enhancing its production speed. In some embodiments, the identification system 1 can be communicatively connected to an image capturing device 14 and an image computing device 16 for generating to-be-identified images, but the present invention is not limited thereto. In some embodiments, the image capturing device 14 can be, for example, a photosensitive coupling element, a camera or a video camera, such as a surveillance camera installed on the roadside, a camera or a driving recorder installed on a car; and the image computing device 16 can include a central processing unit and a graphic processor capable of processing and analyzing data, and a storage. The image computing device 16 can be, for example, a computer, a smartphone, a server, or a single-chip microcomputer, which may be mounted on a vehicle or set up in the cloud and be communicatively connected to the identification computing device 10, but the present invention is not limited thereto.

The processor 100 can be configured to execute a plurality of computer-readable instructions to implement functions corresponding to a vehicle detection model M1, a vehicle metadata identification model M2, and a license plate identification model M3 mentioned hereinafter.

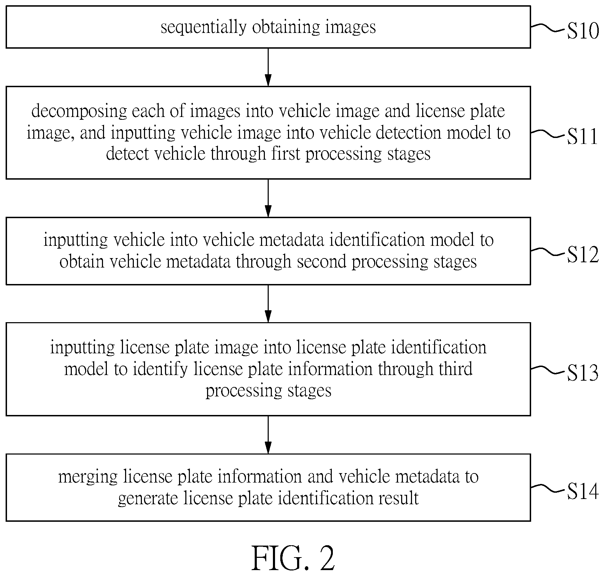

FIG. 2 is a flowchart of an identification method for a license plate according to one embodiment of the present invention. Referring to FIG. 2, the present invention further provides an identification method for a license plate, and in the identification method, the processor 100 is configured to perform the following steps:

Step S10: sequentially obtaining a plurality of images. In step S 10, each of the images can include at least one vehicle and at least one license plate.

Specifically, after the image capturing device 14 obtains multiple continuous images (i.e., a captured video), the image computing device 16 can be further configured to track license plates and vehicles in these continuous images obtained by the image capturing device 14 through an object tracking algorithm for dynamic scenes, use an object detection model to capture the license plates in the continuous images frame by frame, and then calculate a confidence score of the captured license plates. The to-be-identified images in step S 10 are images with a relatively high confidence score that have been stored, and each of the to-be-identified images can include one or more license plates and a corresponding quantity of vehicles.

Step S 11: decomposing each of the images into a vehicle image and a license plate image, and inputting the vehicle image into a vehicle detection model to detect at least one vehicle through a plurality of first processing stages.

In step S 11, each to-be-identified image is decomposed into the vehicle image and the license plate image, which can be carried out based on results generated during an execution of the object tracking algorithm and/or the object detection model by the image computing device 16. For example, based on positions of vehicles and license plates in the to-be-identified image obtained by the object tracking algorithm, a vehicle screenshot and a corresponding license plate screenshot are extracted from each to-be-identified image as the vehicle image and the license plate image, respectively; alternatively, the entire to-be-identified image can be used as the vehicle image, and the license plate screenshot captured by the object detection model can be extracted from the to-be-identified image. It should be noted that the present invention does not limit the method of decomposing each to-be-identified image into the vehicle image and the license plate image.

In addition, the vehicle detection model M1 can be stored in the memory 102 and has been trained to perform the plurality of first processing stages according to vehicle-related features, so as to detect one or more vehicles in an input image. The first processing stages include a frame pre-processing stage, a vehicle detection inference stage and a first post-processing stage. It should be noted that the vehicle detection model M1 can be, for example, an artificial intelligence detection model. The image pre-processing stage mainly involves pre-processing the images (i.e., vehicle images) predetermined to be input into the artificial intelligence detection model. For example, image processing procedures that are capable of highlighting vehicle features, such as noise reduction, edge sharpening and/or binarization, can be performed.

On the other hand, in the vehicle detection inference stage, the preprocessed image is input into an artificial intelligence core for computation. The artificial intelligence core can, for example, adopt a neural network that includes an input layer, multiple hidden layers, and an output layer. The features of the image are first extracted through the input layer, and positions and similarities of the features with respect to vehicle features are then identified through the hidden layers. Finally, detection results are output through the output layer. However, the above details of the vehicle detection inference stage are merely examples, and the present invention does not limit the detection algorithm used.

In the first post-processing stage, the detection results generated in the vehicle detection inference stage are integrated and statistically collected to detect a vehicle from the vehicle image. For example, the detection of the vehicle can involve generating a coordinate range relative to the vehicle image, or directly extracting a precise image of the vehicle from the vehicle image.

Step S12: inputting the vehicle into a vehicle metadata identification model to obtain vehicle metadata through a plurality of second processing stages.

Similarly, the vehicle metadata identification model M2 can be stored in the memory 102 and has been trained to perform the plurality of second processing stages, so as to detect vehicle metadata related to the vehicle in an input image. In this embodiment, the second processing stages include a first vehicle image pre-processing stage, a color classifier inference stage, and a second post-processing stage. The vehicle metadata identification model M2 can be, for example, another artificial intelligence detection model. The first vehicle image pre-processing stage mainly involves pre-processing the images (i.e., an image of the detected vehicle) predetermined to be input into the another artificial intelligence detection model. For example, image processing procedures that are capable of highlighting vehicle features, such as noise reduction, edge sharpening and/or binarization, can be similarly performed.

On the other hand, in the color classifier inference stage, the preprocessed image is input into an artificial intelligence core for computation. The artificial intelligence core can, for example, adopt a neural network that includes an input layer, multiple hidden layers, and an output layer. Color features of the vehicle image are first extracted through the input layer, and similarities of the color features with respect to specific colors are then identified through the hidden layers. Finally, vehicle color detection results are output through the output layer. However, the above details of the vehicle detection inference stage are merely examples, and the present invention does not limit the detection algorithm used.

In the second post-processing stage, the results generated in the color classifier inference stage are integrated and statistically collected to detect a vehicle color from the vehicle image. For example, the detection of the vehicle color can involve generating color coordinates (such as R, G, B) of the vehicle color, or directly generating text used to describe the vehicle color, such as red, green, or blue.

It should be emphasized that in order to achieve parallel processing of multiple tasks, the present invention constructs the aforementioned artificial intelligence computing processes into pipeline architectures. In particular, the first processing stages and the second processing stages are designed as a first pipeline. The concept of pipelines is to divide the same task into different stages and execute each stage asynchronously. Given a scenario in which a pipeline with a first stage and a second stage is provided, for a first task and a second task to be processed, after the first task is processed by the first stage and proceeds to the second stage of the pipeline, the first stage of the pipeline can be used to process the second task at the same time. That is to say, while the processing time required for each task remains unchanged, one task can be initiated without waiting for the previous one to be fully completed.

For example, suppose multiple vehicle images are decomposed from a single to-be-identified image. After a first vehicle image is input into the vehicle detection model M1, when the first vehicle proceeds to the vehicle detection inference stage after the frame pre-processing stage, a second vehicle image can be input and proceeds to the frame pre-processing stage without affecting the continuous processing of the first vehicle image in the vehicle detection inference stage. Similarly, when the first vehicle image proceeds to the first post-processing stage, and the second vehicle image proceeds to the vehicle detection inference stage, a third vehicle image can be input into the frame pre-processing stage. Therefore, three vehicle images can be processed by the first pipeline architecture at a time.

The architecture of the first pipeline has been illustrated. Next, the architecture of the second pipeline will be described.

Step S13: inputting the license plate image into a license plate identification model to identify license plate information through a plurality of third processing stages.

Similarly, the license plate identification model M3 can be stored in the memory 102 and has been trained to perform the plurality of third processing stages, so as to detect license plate information related to the license plate in an input image. The plurality of third processing stages include a license plate image pre-processing stage, a license plate classifier inference stage, and a fourth post-processing stage. The license plate image pre-processing stage and the fourth post-processing stage are similar to the pre-processing and post-processing stages mentioned above, and descriptions thereof will not be repeated herein.

The license plate identification model M3 can be, for example, another artificial intelligence identification model. In the license plate classifier inference stage, the pre-processed images are input to the license plate identification model M3 for computation. The license plate identification model M3, for example, can be trained through machine/deep learning technology using a large and diverse set of data, which allows the license plate identification model M3 to learn to identify text features of license plates, compare them with a database, and then extract relevant license plate information. However, the above details of the license plate classifier inference stage are for exemplary purposes only, and the present invention does not limit the identification algorithm used.

In this embodiment, the license plate recognition model M3 can include a location identification model M31 and a license plate number recognition model M32. Therefore, the license plate information obtained in step S 13 further includes location information and license plate number information.

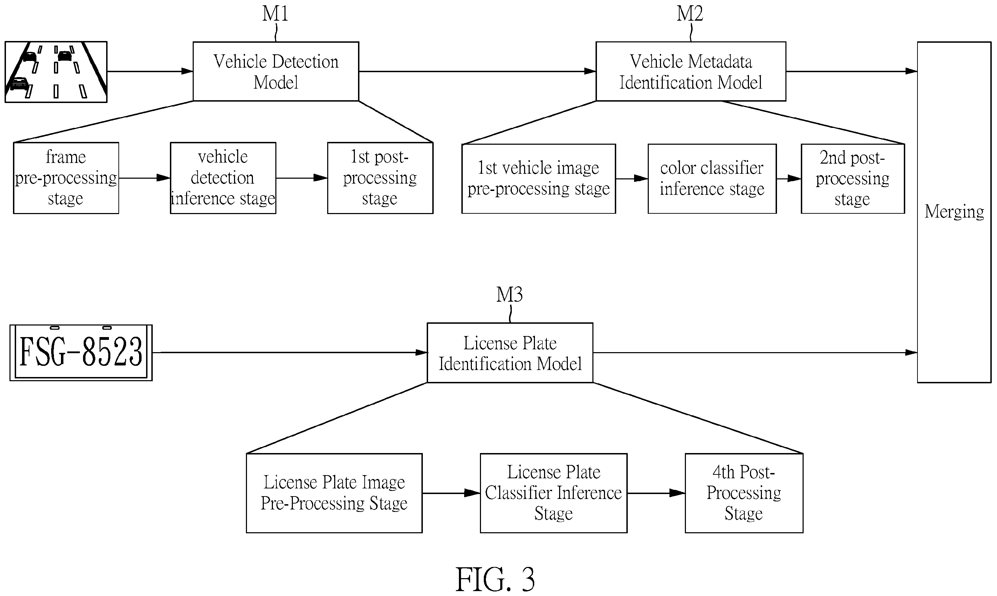

It should be noted that the above-mentioned plurality of third processing stages is further designed as a second pipeline architecture in the present invention. FIG. 3 is a schematic diagram of a synchronous execution of a first pipeline architecture and a second pipeline architecture according to one embodiment of the present invention. Reference can be made to FIG. 3. After the vehicle image and the license plate image are obtained by performing step S 11, the vehicle image and the license plate image can be input into the first pipeline architecture and the second pipeline architecture, respectively. It can be seen that, based on an independence between data required by the first pipeline architecture and the second pipeline architecture, the first pipeline architecture and the second pipeline architecture can be executed synchronously.

Given that the first pipeline architecture includes at least six stages (three first stages and three second stages), and the second pipeline architecture includes at least three stages (three third stages), when multiple images are to be identified, one of the first processing stages, one of the second processing stages, and one of the third processing stages can each be executed simultaneously on different to-be-identified images.

For example, when there are three to-be-identified images, each containing only one license plate and one corresponding vehicle, a first vehicle image and a first license plate image can be simultaneously input into the vehicle detection model M1 and the license plate identification model M3. When the first vehicle image and the first license plate image respectively proceed to the vehicle detection inference stage and the license plate classifier inference stage, a second vehicle image and a second license plate image can be simultaneously input into the vehicle detection model M1 and the license plate identification model M3. When the first vehicle image and the first license plate image respectively proceed to the first post-processing stage and the fourth post-processing stage, and the second vehicle image and the second license plate image respectively proceed to the vehicle detection inference stage and the license plate classifier inference stage, a third vehicle image and a third license plate image can be simultaneously input into the vehicle detection model M1 and the license plate identification model M3, respectively.

When the first vehicle identified from the first vehicle image is input into the vehicle metadata identification model M2, a situation is formed where one of the first processing stages, one of the second processing stages, and one of the third processing stages can be respectively executed on different ones of the to-be-identified images at the same time. By utilizing a highly parallelized architecture, the identification system and the identification method for license plates provided by the present invention can process multiple to-be-identified images concurrently and accelerate the generation of license plate-related data, including vehicle color and license plate information. This helps with the subsequent processing of license plate-related data, such as merging such information into a database, and allowing users to view the identification results through webpages.

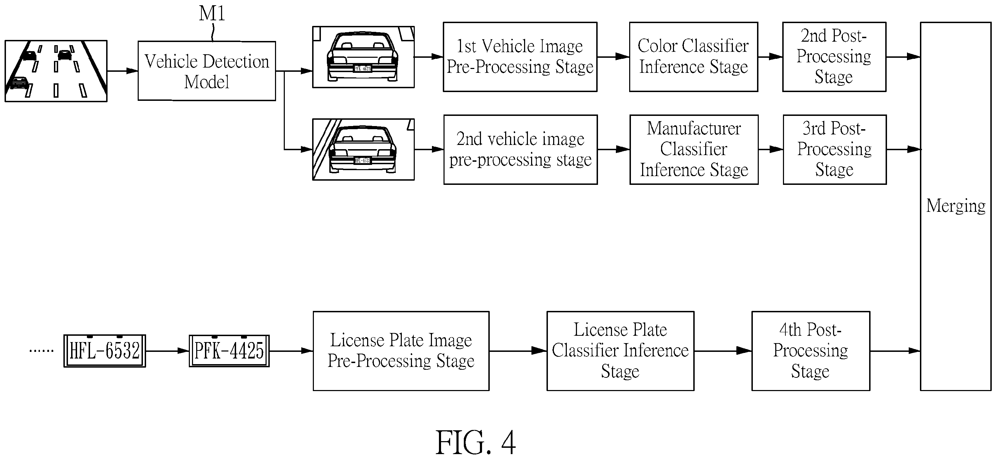

Step S 14: merging the license plate information and the vehicle metadata to generate a license plate identification result. As shown in Figure 4, since completion times of the first pipeline architecture and the second pipeline architecture are not synchronized, it is necessary to synchronize the license plate information and vehicle metadata through step S 14. Therefore, in step S14, the merging of the license plate information and the vehicle metadata is synchronized based on a time difference between times required to execute the first pipeline architecture and the second pipeline architecture.

FIG. 4 is a schematic diagram of a synchronous execution of a third pipeline architecture and a fourth pipeline architecture according to one embodiment of the present invention. As shown in FIG. 4, the first vehicle image pre-processing stage, the color classifier inference stage and the second post-processing stage executed in step S12 are designed as a third pipeline architecture. Next, in this embodiment, the plurality of second processing stages executed in step S12 can further include a second vehicle image pre-processing stage, a manufacturer classifier inference stage and a third post-processing stage, which are designed as a fourth pipeline architecture.

Similarly, the vehicle metadata identification model M2 can be trained to detect vehicle metadata related to the vehicle in an input image. In this embodiment, the vehicle metadata can include a manufacturer. Therefore, in the manufacturer classifier inference stage, the pre-processed image is input into an artificial intelligence core for computation. The artificial intelligence core can, for example, adopt a neural network that includes an input layer, multiple hidden layers, and an output layer. First, the manufacturer-related features of the vehicle image (for example, a vehicle logo and a vehicle appearance) are extracted through the input layer. The hidden layers then identify the similarity of these manufacturer-related features to specific manufacturer-related features. Finally, manufacturer identification results are output through the output layer. However, the above details of the inference stage of the manufacturer classifier are for exemplary purposes only, and the present invention does not limit the identification algorithm used.

In this case, when a quantity of the vehicles detected by the vehicle detection model M1 is plural, different vehicles (i.e., images of the vehicles) can be input into the third pipeline architecture and the fourth pipeline architecture, respectively. Since the data to be processed by the third pipeline architecture and the fourth pipeline architecture have multiple records (i.e., corresponding to multiple vehicles), the third pipeline architecture and the fourth pipeline architecture can be executed synchronously.

That is to say, not only can the first pipeline architecture and the second pipeline architecture be executed synchronously, but the third pipeline architecture and the fourth pipeline architecture that can be executed synchronously are also designed in the first pipeline architecture. Therefore, although an addition of features to be identified, such as the make/manufacturer of a vehicle, may lead to an increase in a quantity or scale of artificial intelligence models, it will not proportionally increase the required processing time.

In conclusion, in the identification system and the identification method for license plates provided in the present invention, by utilizing a highly parallelized architecture, multiple to-be-identified images can be processed concurrently and the generation of license plate-related data can be accelerated, which helps with subsequent processing of license plate-related data.

Furthermore, in the identification system and the identification method for license plates provided in the present invention, not only can the first pipeline architecture and the second pipeline architecture be executed synchronously, but the third pipeline architecture and the fourth pipeline architecture that can be executed synchronously are also designed in the first pipeline architecture. Therefore, although an addition of features to be identified may lead to an increase in a quantity or scale of artificial intelligence models, it will not proportionally increase the required processing time. Therefore, by using pipelines in parallelization architecture and asynchronously executing each process in the serial architecture, the use of all computing resources can be maximized.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. An identification method for a license plate, the identification method **characterized by** comprising:
using at least one processor (100) to perform the following steps:
sequentially obtaining a plurality of images, wherein each of the plurality of images comprises one or more vehicles and at least one license plate;
decomposing each of the plurality of images into a vehicle image and at least one license plate image, and inputting the vehicle image into a vehicle detection model (M1) to detect at least one vehicle through a plurality of first processing stages;
inputting the at least one vehicle into a vehicle metadata identification model (M2) to obtain vehicle metadata through a plurality of second processing stages;
inputting the at least one license plate image into a license plate identification model (M3) to identify at least one piece of license plate information through a plurality of third processing stages; and
merging the at least one piece of license plate information and the vehicle metadata to generate a license plate identification result;
wherein the plurality of first processing stages and the plurality of second processing stages form a first pipeline architecture, the plurality of third processing stages form a second pipeline architecture, and the first pipeline architecture and the second pipeline architecture are executed simultaneously.

2. The identification method according to claim 1, wherein the plurality of first processing stages comprise:
a frame pre-processing stage;
a vehicle detection inference stage; and
a first post-processing stage.

3. The identification method according to any of claims 1 and 2, wherein a third pipeline architecture is formed by the plurality of second processing stages, and the plurality of second processing stages comprise:
a first vehicle image pre-processing stage;
a color classifier inference stage; and
a second post-processing stage.

4. The identification method according to any of claims 1 to 3, wherein a fourth pipeline architecture is formed by the plurality of second processing stages, and the plurality of second processing stages comprise:
a second vehicle image pre-processing stage;
a manufacturer classifier inference stage; and
a third post-processing stage.

5. The identification method according to any of claims 1 to 4, wherein the step of inputting the at least one vehicle into the vehicle metadata identification model (M2) to obtain the vehicle metadata through the plurality of second processing stages comprises:
inputting, in response to detecting that a quantity of the at least one vehicle is plural, different ones of the vehicle into the third pipeline architecture and the fourth pipeline architecture, respectively.

6. The identification method according to any of claims 1 to 5, wherein the third pipeline architecture and the fourth pipeline architecture are executed synchronously.

7. The identification method according to any of claims 1 to 6, wherein the plurality of third processing stages comprise:
a license plate image pre-processing stage;
a license plate classifier inference stage; and
a fourth post-processing stage.

8. The identification method according to any of claims 1 to 7, wherein the license plate identification model (M3) comprises a location identification model and a license plate number identification model, and the at least one piece of license plate information comprises location information and license plate number information.

9. The identification method according to any of claims 1 to 8, wherein the merging of the at least one piece of license plate information and the vehicle metadata is synchronized based on a time difference between lengths of time required for respectively executing the first pipeline architecture and the second pipeline architecture.

10. The identification method according to any of claims 1 to 9, wherein at least one of the plurality of first processing stages, at least one of the plurality of second processing stages and at least one of the plurality of third processing stages are executed simultaneously for different images of the plurality of images.

11. An identification system (1) for a license plate, the identification system (1) **characterized by** comprising:
at least one processor (100); and
a memory (102);
wherein the at least one processor (100) is configured to perform the steps of any one of claims 1 to 10.
